# EUROPÄISCHE PATENTANMELDUNG

(11) **EP 3 982 473 A1**
(43) Veröffentlichungstag der Anmeldung: **13.04.2022**
(21) Anmeldenummer: 20201296.9
(22) Anmeldetag: 12.10.2020
(51) Int. Cl.: H01M 50/213, H01M 50/342, H01M 10/0525

(54) **AKKUPACK, BEARBEITUNGSSYSTEM UND VERFAHREN ZUR HERSTELLUNG EINES AKKUPACKS**

(71) Anmelder: Andreas Stihl AG & Co. KG, 71336 Waiblingen (DE)
(72) Erfinder: Wegmann, Raphael, 71229 Leonberg (DE); Amann, Daniel, 70374 Stuttgart (DE); Jäger, Thilo, 71394 Kernen (DE); Behringer, Patrick, 73760 Ostfildern (DE); Frey, Siegfried, 70597 Stuttgart (DE); Knapp, Danny, 70734 Fellbach (DE); Wilka, Marcel, 73560 Böbingen (DE)
(74) Vertreter: Patentanwälte Ruff, Wilhelm, Beier, Dauster & Partner mbB

(57) **Zusammenfassung**

Die Erfindung bezieht sich auf einen Akkupack (1) zur Versorgung eines elektrisch angetriebenen Bearbeitungsgeräts (101) mit elektrischer Antriebsleistung (AL), wobei der Akkupack (1) aufweist:
- mindestens eine Akkumulatorzelle (2), wobei die Akkumulatorzelle (2) mindestens eine Sicherheitseinrichtung (3) aufweist,
- mindestens eine spannungsführende Oberfläche (4),
- einen Isolierlack (5), wobei der Isolierlack (5) auf der spannungsführenden Oberfläche (4) festhaftet, und
- mindestens ein Abdeckelement (6), wobei das mindestens eine Abdeckelement (6) die Sicherheitseinrichtung (3) derart abdeckt, dass kein Isolierlack (5) auf und/oder in der Sicherheitseinrichtung (3) festhaftet.

## Beschreibung

### ANWENDUNGSGEBIET UND STAND DER TECHNIK

Die Erfindung bezieht sich auf einen Akkupack zur Versorgung eines elektrisch angetriebenen Bearbeitungsgeräts mit elektrischer Antriebsleistung, ein Bearbeitungssystem aufweisend einen solchen Akkupack und ein elektrisch angetriebenes Bearbeitungsgerät und ein Verfahren zur Herstellung eines Akkupacks zur Versorgung eines elektrisch angetriebenen Bearbeitungsgeräts mit elektrischer Antriebsleistung.

### AUFGABE UND LÖSUNG

Der Erfindung liegt als Aufgabe die Bereitstellung eines Akkupacks zur Versorgung eines elektrisch angetriebenen Bearbeitungsgeräts mit elektrischer Antriebsleistung, eines Bearbeitungssystems aufweisend einen solchen Akkupack und ein elektrisch angetriebenes Bearbeitungsgerät und eines Verfahrens zur Herstellung eines Akkupacks zur Versorgung eines elektrisch angetriebenen Bearbeitungsgeräts mit elektrischer Antriebsleistung zugrunde, wobei der Akkupack und somit das Bearbeitungssystem und das Verfahren jeweils verbesserte Eigenschaften aufweisen.

Die Erfindung löst die Aufgabe durch die Bereitstellung eines Akkupacks mit den Merkmalen des Anspruchs 1, eines Bearbeitungssystems mit den Merkmalen des Anspruchs 14 und eines Verfahrens mit den Merkmalen des Anspruchs 15. Vorteilhafte Weiterbildungen und/oder Ausgestaltungen der Erfindung sind in den abhängigen Ansprüchen beschrieben.

Der erfindungsgemäße Akkupack (Englisch: battery pack) ist zur, insbesondere automatischen, Versorgung eines elektrisch angetriebenen Bearbeitungsgeräts, insbesondere Garten-, Forst- und/oder Baubearbeitungsgeräts, bzw. Elektrowerkzeugs mit elektrischer Antriebsleistung ausgebildet bzw. konfiguriert. Der Akkupack umfasst bzw. weist mindestens eine Akkumulatorzelle, mindestens eine spannungsführende Oberfläche, einen Isolierlack und mindestens ein Abdeckelement auf. Die Akkumulatorzelle umfasst bzw. weist mindestens eine Sicherheitseinrichtung auf. Der Isolierlack haftet, insbesondere unmittelbar, auf der spannungsführenden Oberfläche fest. Das mindestens eine Abdeckelement deckt, insbesondere unmittelbar, die Sicherheitseinrichtung, insbesondere vollständig, derart ab, insbesondere zeitlich direkt nach einer Herstellung des Akkupacks, dass kein Isolierlack auf und/oder in der Sicherheitseinrichtung festhaftet.

Die Sicherheitseinrichtung ermöglicht im Falle einer Überschreitung einer Betriebsgrenze der Akkumulatorzelle einen dadurch verursachten Schaden klein zu halten oder sogar ganz zu vermeiden.

Das Abdeckelement bzw. dass kein Isolierlack auf und/oder in der Sicherheitseinrichtung festhaftet ermöglicht eine ordnungsgemäße Funktion bzw. Wirkung der Sicherheitseinrichtung. Insbesondere könnte im, insbesondere nicht-erfindungsgemäßen, Falle von Isolierlack auf und/oder in der Sicherheitseinrichtung festhaftend dieser eine ordnungsgemäße Funktion der Sicherheitseinrichtung verhindern.

Des Weiteren ermöglicht das Abdeckelement ein Auftragen des Isolierlacks auf die spannungsführende Oberfläche ohne, insbesondere viel, Rücksicht auf die abgedeckte Sicherheitseinrichtung nehmen zu brauchen. Somit ermöglicht dies eine einfache bzw. unkomplizierte und somit kostengünstige Herstellung des Akkupacks.

Der Isolierlack ermöglicht eine elektrische Isolation der spannungsführenden Oberfläche und somit eine unbeabsichtigte bzw. ungewollte, insbesondere elektrische, Kontaktierung, insbesondere Berührung, der spannungsführenden Oberfläche zu vermeiden. Somit ermöglicht dies einen dadurch verursachten Schaden zu vermeiden.

Insbesondere kann der Akkupack, insbesondere die mindestens eine Akkumulatorzelle, eine maximale elektrische Antriebsleistung von minimal 10 Watt (W), insbesondere von minimal 100 W, insbesondere von minimal 1 Kilowatt (kW), insbesondere von minimal 2 kW, und/oder von maximal 10 kW, insbesondere von maximal 5 kW, insbesondere von 3 kW, aufweisen. Zusätzlich oder alternativ kann der Akkupack, insbesondere die mindestens eine Akkumulatorzelle, eine Nennspannung von minimal 1 Volt (V), insbesondere von minimal 2 V, insbesondere von minimal 5 V, insbesondere von minimal 10 V, insbesondere von minimal 20 V, und/oder von maximal 100 V, insbesondere von maximal 50 V, insbesondere von 36 V, aufweisen. Weiter zusätzlich oder alternativ kann der Akkupack, insbesondere kann die mindestens eine Akkumulatorzelle, einen, insbesondere elektrischen, maximalen Energieinhalt von minimal 100 Wattstunden (Wh), insbesondere von minimal 200 Wh, und/oder von maximal 4000 Wh, insbesondere von maximal 2000 Wh, insbesondere von maximal 1000 Wh, insbesondere von maximal 500 Wh, insbesondere von 337 Wh, aufweisen.

Die mindestens eine Akkumulatorzelle kann zur Versorgung des Bearbeitungsgeräts mit Antriebsleistung ausgebildet sein. Zusätzlich oder alternativ kann die Akkumulatorzelle einen, insbesondere elektrischen, maximalen Energieinhalt von minimal 6 Wh und/oder von maximal 360 Wh aufweisen. Insbesondere kann die Akkumulatorzelle einen maximalen Energieinhalt von 6,5 Amperestunden mal 3,6 Volt = 23,4 Wh aufweisen. Weiter zusätzlich oder alternativ kann die Akkumulatorzelle ein einzelnes wiederaufladbares Speicherelement für elektrische Energie auf elektrochemischer Basis sein. Weiter zusätzlich oder alternativ kann die Akkumulatorzelle eine Lithium-Ionen-Akkumulatorzelle sein.

Der Isolierlack kann die spannungsführende Oberfläche, insbesondere vollständig, abdecken. Zusätzlich oder alternativ kann der Isolierlack in einem festen, insbesondere ausgehärteten, Zustand sein. Weiter zusätzlich oder alternativ kann eine Dicke des Isolierlacks, insbesondere ein Wert der Dicke, minimal 0,1 Mikrometer (µm) und/oder maximal 1000 µm sein.

Das Abdeckelement kann von dem Isolierlack verschieden sein. Insbesondere braucht oder kann das Abdeckelement keinen Lack aufweisen, insbesondere kein Lack zu sein. Zusätzlich oder alternativ kann das Abdeckelement auf der Akkumulatorzelle aufgebracht sein.

In einer Weiterbildung der Erfindung umfasst bzw. weist die Akkumulatorzelle mindestens einen Zellkontakt bzw. ein Zellterminal bzw. einen Zellpol auf. Der Zellkontakt umfasst bzw. weist die spannungsführende Oberfläche auf. Zusätzlich oder alternativ umfasst bzw. weist der Akkupack mindestens einen Zellkontaktierer auf. Der Zellkontaktierer umfasst bzw. weist die spannungsführende Oberfläche auf. Weiter zusätzlich oder alternativ umfasst bzw. weist der Akkupack eine Packelektronik, insbesondere eine Mess-, Leistungs-, Benutzerschnittstellen- und/oder Übertragungselektronik, auf. Die Packelektronik umfasst bzw. weist die spannungsführende Oberfläche auf. Weiter zusätzlich oder alternativ umfasst bzw. weist der Akkupack mindestens einen Packkontaktverbinder auf. Der Packkontaktverbinder umfasst bzw. weist die spannungsführende Oberfläche auf. Dies ermöglicht, insbesondere der Zellkontakt, der Zellkontaktierer, die Packelektronik und/oder der Packkontaktverbinder ermöglichen/ermöglicht, eine Leitung elektrischen Stroms. Insbesondere kann der Zellkontakt ein Pluskontakt bzw. ein positiver Zellkontakt sein. Zusätzlich oder alternativ können der Zellkontakt und der Zellkontaktierer sich, insbesondere unmittelbar und/oder elektrisch, kontaktieren, insbesondere berühren. Weiter zusätzlich oder alternativ können der Zellkontakt oder der Zellkontaktierer und die Packelektronik sich, insbesondere unmittelbar und/oder elektrisch, kontaktieren, insbesondere berühren. Insbesondere kann der Zellkontaktierer den Zellkontakt mit einem weiteren Zellkontakt einer weiteren Akkumulatorzelle des Akkupacks und/oder der Packelektronik elektrisch verbinden. Weiter zusätzlich oder alternativ können der Zellkontakt oder der Zellkontaktierer oder die Packelektronik und der Packkontaktverbinder sich, insbesondere unmittelbar und/oder elektrisch, kontaktieren, insbesondere berühren. Weiter zusätzlich oder alternativ kann der Packkontaktverbinder zum, insbesondere unmittelbaren und/oder elektrischen, Kontaktieren, insbesondere Berühren eines Gerätekontaktverbinders des Bearbeitungsgeräts ausgebildet sein. Insbesondere kann der Packkontaktverbinder zum elektrischen Verbinden des Zellkontakts, des Zellkontaktierers oder der Packelektronik mit dem Gerätekontaktverbinder ausgebildet sein. Weiter zusätzlich oder alternativ kann die Messelektronik zur, insbesondere automatischen, Messung von einer Eigenschaft, insbesondere einer Spannung, der Akkumulatorzelle ausgebildet sein. Dies kann ermöglichen sicherheitskritische Zustände der Akkumulatorzelle zu erfassen. Weiter zusätzlich oder alternativ kann die Leistungselektronik zur, insbesondere automatischen, Steuerung, insbesondere Beendigung, einer Abgabe der elektrischen Antriebsleistung von dem Akkupack und/oder einer Aufnahme von elektrischer Ladeleistung durch den Akkupack, insbesondere in Abhängigkeit von der gemessenen Eigenschaft, ausgebildet sein. Dies kann ermöglichen einen sicherheitskritischen Zustand der Akkumulatorzelle und somit des Akkupacks klein zu halten oder sogar ganz zu vermeiden. Weiter zusätzlich oder alternativ kann die Benutzerschnittstellenelektronik zur, insbesondere automatischen, Interaktion mit einem Benutzer, insbesondere zum Ausgeben eines Ladezustands des Akkupacks, ausgebildet sein. Weiter zusätzlich oder alternativ kann die Übertragungselektronik zur, insbesondere automatischen, kabellosen Übertragung von mindestens einem Betriebsparameter und/oder Betriebszustand ausgebildet sein.

In einer Weiterbildung der Erfindung umfasst bzw. weist die Sicherheitseinrichtung ein Sicherheitsventil und/oder eine Stromunterbrechungseinrichtung (Englisch: current interrupt device, CID) auf, insbesondere ist die Sicherheitseinrichtung das Sicherheitsventil und/oder die Stromunterbrechungseinrichtung. Das Sicherheitsventil ermöglicht im Falle einer Überschreitung eines Betriebsgrenzdrucks der Akkumulatorzelle einen dadurch verursachten Schaden klein zu halten oder sogar ganz zu vermeiden. Zusätzlich oder alternativ ermöglicht die Stromunterbrechungseinrichtung im Falle einer Überschreitung der Betriebsgrenze, insbesondere des Betriebsgrenzdrucks der Akkumulatorzelle, eine Unterbrechung eines Flusses eines Stroms und somit einen dadurch verursachten Schaden klein zu halten oder sogar ganz zu vermeiden.

In einer Weiterbildung der Erfindung umfasst bzw. weist die Sicherheitseinrichtung, insbesondere aufweisend das Sicherheitsventil, mindestens eine Gasentweichungsöffnung auf. Das mindestens eine Abdeckelement deckt, insbesondere unmittelbar, die mindestens eine Gasentweichungsöffnung, insbesondere vollständig, ab, insbesondere zeitlich direkt nach einer Herstellung des Akkupacks. Zusätzlich oder alternativ umfasst bzw. weist die Sicherheitseinrichtung, insbesondere aufweisend das Sicherheitsventil und/oder die Stromunterbrechungseinrichtung, mindestens eine Sollbruchstelle auf. Das mindestens eine Abdeckelement deckt die mindestens eine Sollbruchstelle, insbesondere vollständig, ab, insbesondere zeitlich direkt nach einer Herstellung des Akkupacks. Die Gasentweichungsöffnung ermöglicht ein Entweichen bzw. ein Ablassen von Abgas von innen bzw. innerhalb der Akkumulatorzelle nach außen bzw. außerhalb der Akkumulatorzelle, insbesondere wenn ein Druck von Abgas erzeugt durch eine elektrochemische Reaktion stattfindend in bzw. innerhalb der Akkumulatorzelle einen Betriebsgrenzdruck überschreitet. Zusätzlich oder alternativ ermöglicht die, insbesondere gebrochene, Sollbruchstelle das Entweichen von Abgas von innen nach außen, insbesondere wenn der Druck den Betriebsgrenzdruck überschreitet, insbesondere und somit die Sollbruchstelle bricht. Weiter zusätzlich oder alternativ ermöglicht die, insbesondere gebrochene, Solbruchstelle eine Unterbrechung eines Flusses eines Stroms, insbesondere wenn der Druck den Betriebsgrenzdruck überschreitet, insbesondere und somit die Sollbruchstelle bricht. Das Abdeckelement bzw. dass kein Isolierlack auf und/oder in der Sicherheitseinrichtung festhaftet ermöglicht eine freie bzw. nicht durch Isolierlack verstopfte Gasentweichungsöffnung und/oder ein Zulassen eines Brechens der Sollbruchstelle. Insbesondere könnte im, insbesondere nicht-erfindungsgemäßen, Falle von Isolierlack auf und/oder in der Sicherheitseinrichtung festhaftend dieser die Gasentweichungsöffnung verstopfen und/oder ein Brechen der Sollbruchstelle verhindern, insbesondere blockieren. Insbesondere kann die ungebrochene bzw. intakte Sollbruchstelle zum Verhindern eines Entweichens von Abgas von innen nach außen und/oder zum Zulassen des Flusses des Stroms ausgebildet sein.

In einer Weiterbildung der Erfindung ist die Akkumulatorzelle eine, insbesondere längliche, Rundzelle. Die Sicherheitseinrichtung ist an einer Stirnseite der Rundzelle angeordnet. Das mindestens eine Abdeckelement hat bzw. weist eine, insbesondere geschlossene, Ringform auf. Dies ermöglicht die Abdeckung der Sicherheitseinrichtung mittels des mindestens einen Abdeckelements. Insbesondere kann die Sicherheitseinrichtung, insbesondere aufweisend die mindestens eine Gasentweichungsöffnung, an der Stirnseite eine, insbesondere entsprechende bzw. korrespondierende, Ringform haben bzw. aufweisen. Zusätzlich oder alternativ ermöglicht dies eine Kontaktierung des Zellkontakts, soweit angeordnet an der Stirnseite in einer Seitenmitte, durch eine freie Ringmitte des Abdeckelements hindurch. Insbesondere kann eine Länge der Rundzelle größer als ein Durchmesser der Rundzelle sein.

In einer Weiterbildung der Erfindung ist das Abdeckelement in mindestens einer formtragenden Schicht aufgebracht. Dies ermöglicht ein Aufbringen des Abdeckelements ohne, insbesondere viel, Rücksicht auf die Sicherheitseinrichtung nehmen zu brauchen. Insbesondere kann der Isolierlack formlos aufgebracht sein.

In einer Weiterbildung der Erfindung ist das Abdeckelement für den Isolierlack, insbesondere in einem flüssigen, insbesondere nicht-ausgehärteten, Zustand, undurchlässig. Dies ermöglicht ein Laufen des Isolierlacks durch das Abdeckelement hindurch zu vermeiden.

In einer Ausgestaltung der Erfindung besteht das Abdeckelement teilweise oder vollständig aus Polyethylenterephthalat (PET).

In einer Weiterbildung der Erfindung klebt, insbesondere haftet, das Abdeckelement auf der Akkumulatorzelle fest, insbesondere zeitlich direkt nach einer Herstellung des Akkupacks. Dies ermöglicht eine zuverlässige Abdeckung der Sicherheitseinrichtung mittels des mindestens einen Abdeckelements.

In einer Ausgestaltung der Erfindung klebt das Abdeckelement auf der Akkumulatorzelle mittels eines Klebstoffs, insbesondere eines Haftklebers, fest. Der Klebstoff ist teilweise oder vollständig ein Acrylatklebstoff bzw. besteht teilweise oder vollständig aus Acrylatklebstoff.

In einer Ausgestaltung der Erfindung ist eine Klebkraft, insbesondere ein Wert der Klebkraft, pro Fläche, insbesondere Wert der Fläche, zwischen dem Abdeckelement und der Akkumulatorzelle maximal 1000 Newton pro Quadratmeter (N/m²) und/oder minimal 0,1 N/m². Dies, insbesondere der Maximalwert, ermöglicht ein beabsichtigtes bzw. gewolltes Lösen des Abdeckelements von der Akkumulatorzelle, insbesondere verursacht durch einen Druckausgleich von innen bzw. innerhalb der Akkumulatorzelle nach außen bzw. außerhalb der Akkumulatorzelle. Zusätzlich oder alternativ ermöglicht dies, insbesondere der Minimalwert, ein unbeabsichtigtes bzw. ungewolltes Lösen des Abdeckelements von der Akkumulatorzelle zu vermeiden. Das, insbesondere beabsichtigte bzw. gewollte, Lösen des Abdeckelements von der Akkumulatorzelle ermöglicht eine ordnungsgemäße Funktion bzw. Wirkung der Sicherheitseinrichtung, insbesondere aufweisend die mindestens eine Gasentweichungsöffnung und/oder die mindestens eine Sollbruchstelle. Insbesondere könnte im, insbesondere nicht-erfindungsgemäßen, Falle von einem Nicht-Lösen des Abdeckelements von der Akkumulatorzelle dieses eine ordnungsgemäße Funktion der Sicherheitseinrichtung verhindern, insbesondere die Gasentweichungsöffnung verschließen und/oder ein Brechen der Sollbruchstelle verhindern, insbesondere blockieren.

In einer Ausgestaltung der Erfindung ist das Abdeckelement selbstklebend. Dies ermöglicht ein einfaches bzw. unkompliziertes Aufbringen des Abdeckelements. Insbesondere kann das Abdeckelement einen, insbesondere funktionalen Träger, insbesondere einen Trägerstoff bzw. - material, und den Klebstoff aufweisen, insbesondere sein, wobei der Träger, insbesondere einseitig, mit dem Klebstoff beschichtet sein kann.

In einer Weiterbildung der Erfindung ist der Isolierlack auf der spannungsführenden Oberfläche mittels Eintauchens der spannungsführenden Oberfläche in den Isolierlack aufgebracht.

Das erfindungsgemäße Bearbeitungssystem, insbesondere Garten-, Forst- und/oder Baubearbeitungssystem, bzw. Elektrowerkzeugsystem umfasst bzw. weist einen, insbesondere den, Akkupack wie vorhergehend beschrieben und ein elektrisch angetriebenes, insbesondere das elektrisch angetriebene, Bearbeitungsgerät auf. Der Akkupack und das Bearbeitungsgerät sind zur elektrischen Verbindung miteinander zur, insbesondere automatischen, Versorgung des Bearbeitungsgeräts mit elektrischer Antriebsleistung von dem Akkupack ausgebildet bzw. konfiguriert.

Insbesondere kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann. Zusätzlich oder alternativ kann das Bearbeitungsgerät einen Elektroantriebsmotor aufweisen. Weiter zusätzlich oder alternativ können der Akkupack und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Bearbeitungsgerät zur, insbesondere werkzeugfrei und/oder zerstörungsfrei, lösbaren mechanischen Verbindung miteinander ausgebildet sein. Insbesondere kann das Bearbeitungsgerät zum Tragen des Akkupacks ausgebildet sein. Insbesondere kann das Bearbeitungsgerät eine Akkuaufnahme, insbesondere einen Akkuschacht, aufweisen, wobei die Akkuaufnahme zum Aufnehmen des Akkupacks ausgebildet sein kann. Alternativ kann der Akkupack in das Bearbeitungsgerät integriert sein. Weiter zusätzlich oder alternativ können der Akkupack und das Bearbeitungsgerät zur elektrischen Verbindung miteinander mittels Kontaktierens des mindestens einen Packkontaktverbinders und des, insbesondere mindestens einen, Gerätekontaktverbinders voneinander ausgebildet sein.

In einer Weiterbildung der Erfindung ist das elektrisch angetriebene Bearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

Das erfindungsgemäße Verfahren ist zur Herstellung bzw. Montage eines, insbesondere des, Akkupacks, insbesondere wie vorhergehend beschrieben, zur Versorgung eines, insbesondere des, elektrisch angetriebenen Bearbeitungsgeräts mit elektrischer Antriebsleistung ausgebildet bzw. konfiguriert bzw. vorgesehen. Das Verfahren umfasst bzw. weist die Schritte auf: a) Abdecken einer, insbesondere der, Sicherheitseinrichtung einer, insbesondere der, Akkumulatorzelle, insbesondere des Akkupacks, mittels mindestens eines, insbesondere des mindestens einen, Abdeckelements, insbesondere des Akkupacks. b) Eintauchen mindestens einer, insbesondere der mindestens einen, spannungsführenden Oberfläche, insbesondere des Akkupacks, insbesondere und der Akkumulatorzelle mit dem mindestens einen Abdeckelement, in einen, insbesondere den, Isolierlack, insbesondere des Akkupacks und/oder in dem flüssigen Zustand, derart, dass der Isolierlack auf der spannungsführenden Oberfläche festhaftet. Das Abdecken im Schritt a) erfolgt bzw. wird derart ausgeführt, dass durch den Schritt b) kein Isolierlack auf und/oder in der Sicherheitseinrichtung festhaftet.

Das Verfahren kann die gleichen Vorteile ermöglichen wie der vorhergehend beschriebene Akkupack.

Insbesondere kann der Schritt b) zeitlich nach dem Schritt a) ausgeführt werden. Zusätzlich oder alternativ kann das Verfahren aufweisen, insbesondere zeitlich nach dem Schritt b): Aushärten des Isolierlacks in den festen Zustand.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines Abdeckens einer Sicherheitseinrichtung einer Akkumulatorzelle mittels eines Abdeckelements eines erfindungsgemäßen Verfahrens zur Herstellung eines erfindungsgemäßen Akkupacks,
- Fig. 2: eine Perspektivansicht eines Eintauchens mindestens einer spannungsführenden Oberfläche in einen Isolierlack des Verfahrens zur Herstellung des Akkupacks,
- Fig. 3: eine Längsschnittansicht der Akkumulatorzelle aufweisend die Sicherheitseinrichtung mittels des Abdeckelements abgedeckt und des Isolierlacks auf der spannungsführenden Oberfläche festhaftend, wobei kein Isolierlack auf und/oder in der Sicherheitseinrichtung festhaftet,
- Fig. 4: eine weitere Längsschnittansicht der Akkumulatorzelle aufweisend die Sicherheitseinrichtung aufweisend eine Stromunterbrechungseinrichtung und eine Sollbruchstelle beim Brechen der Sollbruchstelle bzw. beim Unterbrechen der Stromunterbrechungseinrichtung,
- Fig. 5: eine weitere Längsschnittansicht der Akkumulatorzelle aufweisend die Sicherheitseinrichtung aufweisend ein Sicherheitsventil, eine Gasentweichungsöffnung und eine Sollbruchstelle beim Brechen der Sollbruchstelle und somit beim Entweichen von Abgas durch die Gasentweichungsöffnung bzw. beim Öffnen des Sicherheitsventils,
- Fig. 6: eine Explosionsansicht des Akkupacks, und
- Fig. 7: eine schematische Ansicht eines erfindungsgemäßen Bearbeitungssystems aufweisend den Akkupack und ein elektrisch angetriebenes Bearbeitungsgerät.

### DETAILLIERTE BESCHREIBUNG DER AUSFÜHRUNGSBEISPIELE

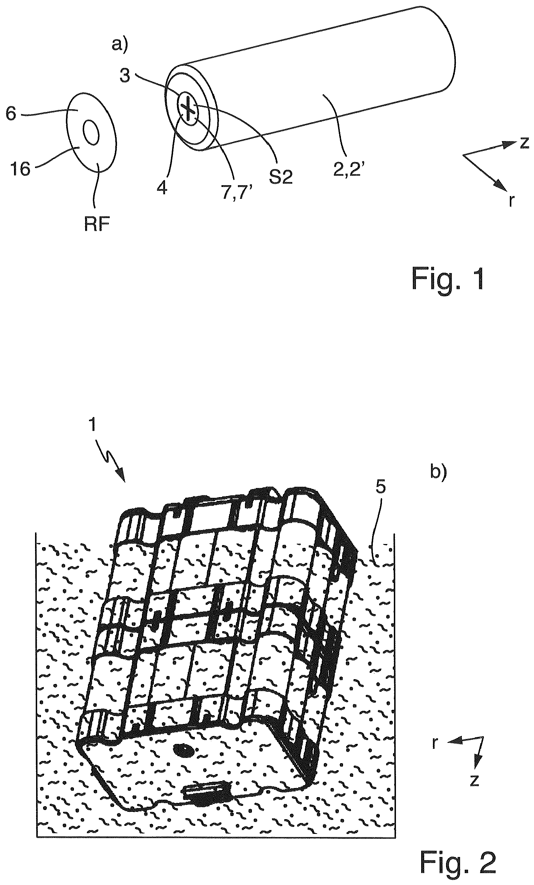

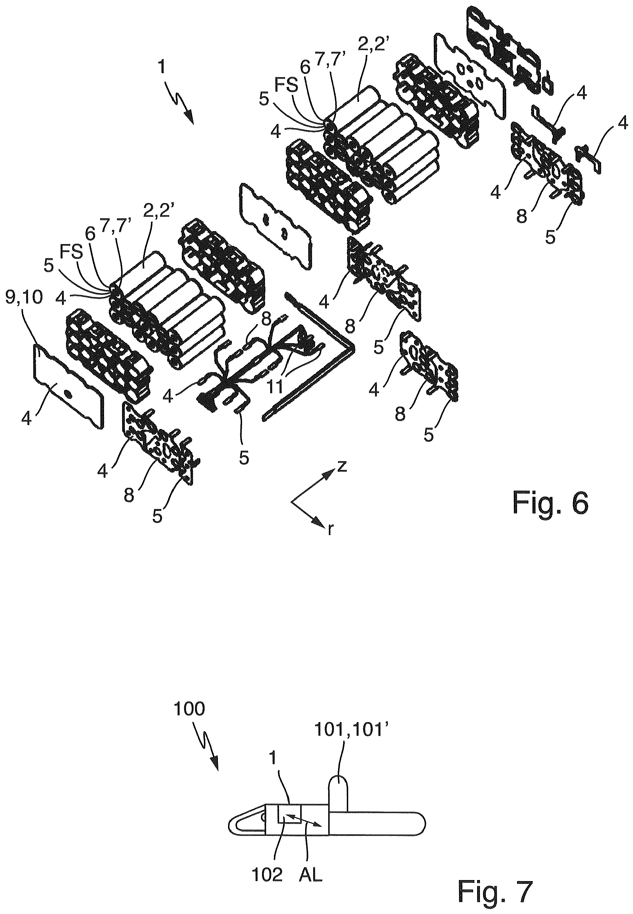

Fig. 1 und 2 zeigen ein erfindungsgemäßes Verfahren zur Herstellung eines erfindungsgemäßen Akkupacks 1 zur Versorgung eines elektrisch angetriebenen Bearbeitungsgeräts 101 mit elektrischer Antriebsleistung AL, wie in Fig. 7 gezeigt. Das Verfahren weist die Schritte auf: a) Abdecken einer Sicherheitseinrichtung 3 einer Akkumulatorzelle 2 mittels mindestens eines Abdeckelements 6, in dem gezeigten Ausführungsbeispiel nur eines einzigen Abdeckelements 6. b) Eintauchen mindestens einer spannungsführenden Oberfläche 4, insbesondere und der Akkumulatorzelle 2 mit dem mindestens einen Abdeckelement 6, in einen Isolierlack 5, insbesondere in einem flüssigen Zustand LS, derart, dass der Isolierlack 5 auf der spannungsführenden Oberfläche 4 festhaftet. Das Abdecken im Schritt a) erfolgt derart, dass durch den Schritt b) kein Isolierlack 5 auf und/oder in der Sicherheitseinrichtung 3 festhaftet.

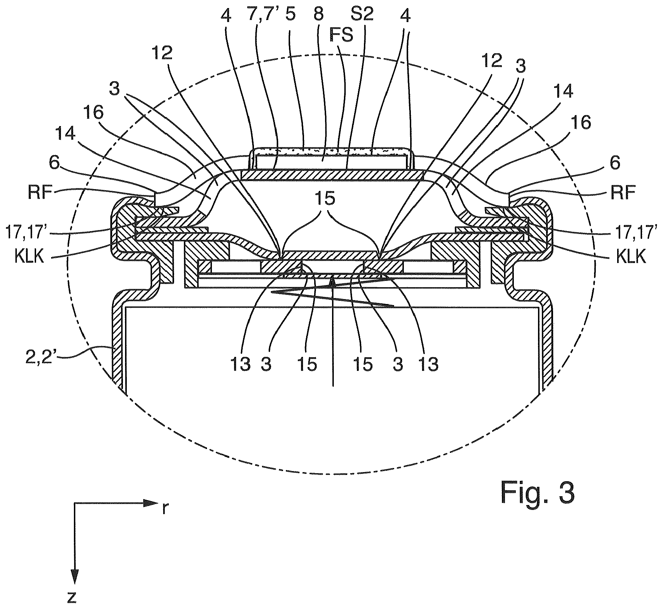

Fig. 2, 6 und 7 zeigen den Akkupack 1 zur Versorgung des Bearbeitungsgeräts 101 mit elektrischer Antriebsleistung AL. Der Akkupack 1 weist die mindestens eine Akkumulatorzelle 2, die mindestens eine spannungsführende Oberfläche 4, den Isolierlack 5 und das mindestens eine Abdeckelement 6 auf. Die Akkumulatorzelle 2 weist die mindestens eine Sicherheitseinrichtung 3 auf, wie in Fig. 3 bis 5 gezeigt. Der Isolierlack 5, insbesondere in einem festen Zustand FS, haftet auf der spannungsführenden Oberfläche 4 fest. Das mindestens eine Abdeckelement 6 deckt die Sicherheitseinrichtung 3 derart ab, dass kein Isolierlack 5 auf und/oder in der Sicherheitseinrichtung 3 festhaftet.

In dem gezeigten Ausführungsbeispiel weist der Akkupack 1 dreißig, insbesondere gleiche, insbesondere typ- und/oder baugleiche, Akkumulatorzellen 2 auf. In alternativen Ausführungsbeispielen kann der Akkupack nur eine einzige Akkumulatorzelle oder mindestens zwei, insbesondere mindestens fünf, insbesondere mindestens zehn, Akkumulatorzellen aufweisen.

Des Weiteren weist in dem gezeigten Ausführungsbeispiel die Akkumulatorzelle 2 nur eine einzige Sicherheitseinrichtung 3 auf. In alternativen Ausführungsbeispielen kann die Akkumulatorzelle mindestens zwei Sicherheitseinrichtungen aufweisen.

Außerdem entspricht, insbesondere gleicht, in dem gezeigten Ausführungsbeispiel eine Anzahl der Abdeckelemente 6 einer Anzahl der Sicherheitseinrichtungen 3. In alternativen Ausführungsbeispielen braucht oder kann die Anzahl der Abdeckelemente der Anzahl der Sicherheitseinrichtungen nicht gleichen, insbesondere entsprechen, bzw. von dieser verschieden sein. In anderen Worten: In dem gezeigten Ausführungsbeispiel deckt nur ein einziges Abdeckelement 6 eine Sicherheitseinrichtung 3 ab. In alternativen Ausführungsbeispielen können mindestens zwei Abdeckelemente eine Sicherheitseinrichtung abdecken.

Im Detail ist der Isolierlack 5 auf der spannungsführenden Oberfläche 4 mittels, insbesondere des, Eintauchens der spannungsführenden Oberfläche 4 in den Isolierlack 5 aufgebracht.

Weiter weist die Akkumulatorzelle 2 mindestens einen Zellkontakt 7 auf. Der Zellkontakt 7 weist die spannungsführende Oberfläche 4 auf.

In dem gezeigten Ausführungsbeispiel weist die Akkumulatorzelle 2 einen weiteren Zellkontakt auf.

Zusätzlich oder alternativ weist der Akkupack 1 mindestens einen Zellkontaktierer 8 auf. Der Zellkontaktierer 8 weist die spannungsführende Oberfläche 4 auf.

In dem gezeigten Ausführungsbeispiel weist der Akkupack 1 eine Mehrzahl von Zellkontaktierern 8 auf.

Weiter zusätzlich oder alternativ weist der Akkupack 1 eine Packelektronik 9, insbesondere eine Mess-, Leistungs-, Benutzerschnittstellen- und/oder Übertragungselektronik 10, auf. Die Packelektronik 9 weist die spannungsführende Oberfläche 4 auf.

Weiter zusätzlich oder alternativ weist der Akkupack 1 mindestens einen Packkontaktverbinder 11 auf. Der Packkontaktverbinder 11 weist die spannungsführende Oberfläche 4 auf.

In dem gezeigten Ausführungsbeispiel weist der Akkupack 1 eine Mehrzahl von Packkontaktverbindern 11 auf.

Zudem kontaktieren der Zellkontakt 7 und der Zellkontaktierer 8 sich.

Des Weiteren kontaktieren der Zellkontaktierer 8 und die Packelektronik 9 sich.

Außerdem kontaktieren die Packelektronik 9 und der Packkontaktverbinder 11 sich.

Weiter sind die Akkumulatorzellen 2 elektrisch zusammengeschaltet, insbesondere parallel oder seriell, insbesondere mittels des mindestens einen Zellkontaktierers 8.

Zudem ist der Zellkontakt 7 ein Pluskontakt 7'.

Des Weiteren weist die Sicherheitseinrichtung 3 ein Sicherheitsventil 12 und/oder eine Stromunterbrechungseinrichtung 13 auf.

Außerdem weist die Sicherheitseinrichtung 3 mindestens eine Gasentweichungsöffnung 14, in dem gezeigten Ausführungsbeispiel zwei Gasentweichungsöffnungen 14, auf. Das mindestens eine Abdeckelement 6 deckt die mindestens eine Gasentweichungsöffnung 14 ab, wie in Fig. 3 gezeigt.

Zusätzlich oder alternativ umfasst bzw. weist die Sicherheitseinrichtung 3 mindestens eine Sollbruchstelle 15, in dem gezeigten Ausführungsbeispiel zwei Typen von Sollbruchstellen 15, auf. Das mindestens eine Abdeckelement 6 deckt die mindestens eine Sollbruchstelle 15 ab.

In dem gezeigten Ausführungsbeispiel entspricht ein erster Typ der Sollbruchstellen 15 der Stromunterbrechungseinrichtung 13.

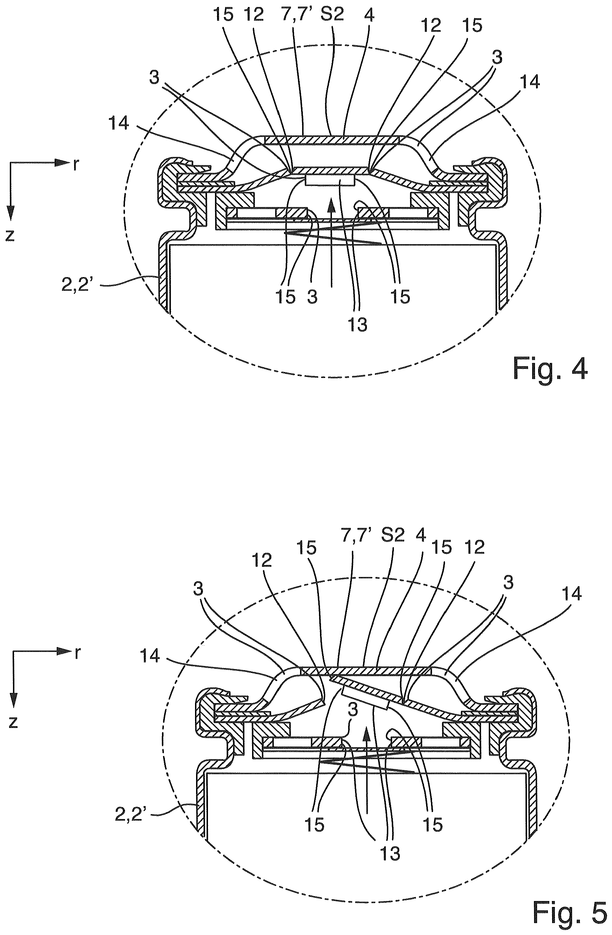

Wenn ein Druck von Abgas erzeugt durch eine elektrochemische Reaktion stattfindend in bzw. innerhalb der Akkumulatorzelle 2 einen Betriebsgrenzdruck überschreitet, bricht der erste Typ der Sollbruchstellen 15 bzw. die Stromunterbrechungseinrichtung 13 unterbricht verursacht durch den Druck von Abgas, wie in Fig. 4 gezeigt. Insbesondere drückt Abgas einen Teil der Sollbruchstelle 15 bzw. der Stromunterbrechungseinrichtung 13 nach außen bzw. außerhalb der Akkumulatorzelle 2, wie durch einen Pfeil gezeigt.

Weiter entspricht ein zweiter Typ der Sollbruchstellen 15 dem Sicherheitsventil 12.

Wenn der Druck den Betriebsgrenzdruck überschreitet, bricht der zweite Typ der Sollbruchstellen 15 bzw. das Sicherheitsventil 12 öffnet, verursacht durch den Druck von Abgas, wie in Fig. 5 gezeigt, insbesondere zeitlich nach dem Brechen des ersten Typs der Sollbruchstellen 15 bzw. dem Unterbrechen der Stromunterbrechungseinrichtung 13. Insbesondere drückt Abgas einen Teil der Sollbruchstelle 15 bzw. des Sicherheitsventils 12 nach außen bzw. außerhalb der Akkumulatorzelle 2, wie durch einen Pfeil gezeigt.

Somit kann Abgas von innen nach außen, insbesondere durch die mindestens eine Gasentweichungsöffnung 14 hindurch, entweichen.

Zudem ist die Akkumulatorzelle 2 eine, insbesondere längliche, Rundzelle 2'. Die Sicherheitseinrichtung 3 ist an einer Stirnseite S2 der Rundzelle 2' angeordnet. Das mindestens eine Abdeckelement 6 hat eine, insbesondere geschlossene, Ringform RF.

In dem gezeigten Ausführungsbeispiel hat die Sicherheitseinrichtung 3, insbesondere aufweisend die mindestens eine Gasentweichungsöffnung 14, an der Stirnseite S2 eine, insbesondere entsprechende, Ringform.

Des Weiteren ist der Zellkontakt 7 an der Stirnseite S2 in einer Seitenmitte angeordnet.

Außerdem kontaktieren der Zellkontakt 7 und der Zellkontaktierer 8 sich durch eine freie Ringmitte des Abdeckelements 6 hindurch.

Weiter ist der weitere Zellkontakt an einer weiteren, insbesondere der Stirnseite S2 gegenüberliegenden, Stirnseite angeordnet.

Zudem ist das Abdeckelement 6 in mindestens einer formtragenden Schicht 16 aufgebracht.

Des Weiteren ist das Abdeckelement 6 für den Isolierlack 5, insbesondere in dem flüssigen Zustand LS, insbesondere und dem festen Zustand FS, undurchlässig.

Im Detail besteht das Abdeckelement 6 teilweise oder vollständig aus PET.

Außerdem klebt, insbesondere haftet, das Abdeckelement 6 auf der Akkumulatorzelle 2 fest.

Im Detail klebt das Abdeckelement 6 auf der Akkumulatorzelle 2 mittels eines Klebstoffs 17, insbesondere eines Haftklebers 17', fest. Der Klebstoff 17 ist teilweise oder vollständig ein Acrylatklebstoff.

Weiter ist das Abdeckelement 6 selbstklebend.

Zudem ist eine Klebkraft pro Fläche KLK zwischen dem Abdeckelement und der Akkumulatorzelle maximal 1000 N/m² und/oder minimal 1000 N/m².

Somit kann das Abdeckelement 6 von der Akkumulatorzelle 2, insbesondere verursacht durch einen Druckausgleich von innen der Akkumulatorzelle 2 nach außen der Akkumulatorzelle 2, beabsichtigt bzw. gewollt gelöst werden, wie in Fig. 4 und 5 gezeigt. In anderen Worten: Das Abdeckelement 6 bzw. den Aufkleber bzw. den Sticker sprengt es beim ersten Druckausgleich weg.

Somit kann Abgas von innen nach außen, insbesondere durch die mindestens eine Gasentweichungsöffnung 14 hindurch, entweichen, wie vorhergehend beschrieben.

Zusammenfassend ermöglicht das, insbesondere ringförmige, Abdeckelement 6 bzw. der Aufkleber, dass keine Flüssigkeiten, insbesondere kein Isolierlack 5, unter das Abdeckelement 6 bzw. die Abdichtung laufen kann. Dies ermöglicht ein Eindringen des Isolierlacks 5 bzw. der Lackierung in die Stromunterbrechungseinrichtung 13 bzw. das CID und/oder das Sicherheitsventil 12 bzw. in deren, insbesondere jeweiligen, Bereich zu verhindern. Somit gibt es keine Beeinflussung des Sicherheitsverhaltens der Akkumulatorzelle 2. In anderen Worten: Durch das Abdeckelement 6 kann der gesamte Core-Pack des Akkupacks 1 lackiert werden (inklusive der mindestens einen Akkumulatorzelle 2), wie in Fig. 2 gezeigt, ohne das Sicherheitsverhalten der Akkumulatorzelle 2 zu verändern, insbesondere ohne das sicherheitskritische Funktionen (Öffnungsdruck der Stromunterbrechungseinrichtung 13 bzw. des CID und/oder des Sicherheitsventils 12) beeinflusst oder sogar außer Kraft gesetzt werden. Durch den Isolierlack 5 bzw. die Lackierung und der daraus folgenden Isolation des Akkupacks 1 ist ein sehr effektiver Schutz gegen Umwelteinflüsse möglich.

Fig. 7 zeigt ein erfindungsgemäßes Bearbeitungssystem 100. Das Bearbeitungssystem 100 weist den Akkupack 1 und das elektrisch angetriebene Bearbeitungsgerät 101 auf. Der Akkupack 1 und das Bearbeitungsgerät 101 sind zur elektrischen Verbindung miteinander zur Versorgung des Bearbeitungsgeräts 101 mit elektrischer Antriebsleistung AL von dem Akkupack 1 ausgebildet, insbesondere elektrisch verbunden, insbesondere mittels Kontaktierens des mindestens einen Packkontaktverbinders 11 und mindestens eines Gerätekontaktverbinders des Bearbeitungsgeräts 101 voneinander.

Im Detail weist das Bearbeitungsgerät 101 eine Akkuaufnahme 102 auf. Die Akkuaufnahme 102 ist zum Aufnehmen des Akkupacks 1 ausgebildet, insbesondere ist der Akkupack 1 aufgenommen.

In dem gezeigten Ausführungsbeispiel ist das Bearbeitungsgerät 101 eine Säge 101'. In alternativen Ausführungsbeispielen kann das Bearbeitungsgerät ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere sein.

Wie die gezeigten und oben erläuterten Ausführungsbeispiele deutlich machen, stellt die Erfindung einen Akkupack zur Versorgung eines elektrisch angetriebenen Bearbeitungsgeräts mit elektrischer Antriebsleistung, ein Bearbeitungssystem aufweisend einen solchen Akkupack und ein elektrisch angetriebenes Bearbeitungsgerät und ein Verfahren zur Herstellung eines Akkupacks zur Versorgung eines elektrisch angetriebenen Bearbeitungsgeräts mit elektrischer Antriebsleistung bereit, wobei der Akkupack und somit das Bearbeitungssystem und das Verfahren jeweils verbesserte Eigenschaften aufweisen.

## Patentansprüche

1. Akkupack (1) zur Versorgung eines elektrisch angetriebenen Bearbeitungsgeräts (101) mit elektrischer Antriebsleistung (AL), wobei der Akkupack (1) aufweist:
- mindestens eine Akkumulatorzelle (2), wobei die Akkumulatorzelle (2) mindestens eine Sicherheitseinrichtung (3) aufweist,
- mindestens eine spannungsführende Oberfläche (4),
- einen Isolierlack (5), wobei der Isolierlack (5) auf der spannungsführenden Oberfläche (4) festhaftet, und
- mindestens ein Abdeckelement (6), wobei das mindestens eine Abdeckelement (6) die Sicherheitseinrichtung (3) derart abdeckt, dass kein Isolierlack (5) auf und/oder in der Sicherheitseinrichtung (3) festhaftet.

2. Akkupack (1) nach Anspruch 1,
- wobei die Akkumulatorzelle (2) mindestens einen Zellkontakt (7) aufweist, wobei der Zellkontakt (7) die spannungsführende Oberfläche (4) aufweist, und/oder
- wobei der Akkupack (1) mindestens einen Zellkontaktierer (8) aufweist, wobei der Zellkontaktierer (8) die spannungsführende Oberfläche (4) aufweist, und/oder
- wobei der Akkupack (1) eine Packelektronik (9) aufweist, insbesondere eine Mess-, Leistungs-, Benutzerschnittstellen- und/oder Übertragungselektronik (10), wobei die Packelektronik (9) die spannungsführende Oberfläche (4) aufweist, und/oder
- wobei der Akkupack (1) mindestens einen Packkontaktverbinder (11) aufweist, wobei der Packkontaktverbinder (11) die spannungsführende Oberfläche (4) aufweist.

3. Akkupack (1) nach einem der vorhergehenden Ansprüche,
- wobei die Sicherheitseinrichtung (3) ein Sicherheitsventil (12) und/oder eine Stromunterbrechungseinrichtung (13) aufweist.

4. Akkupack (1) nach einem der vorhergehenden Ansprüche,
- wobei die Sicherheitseinrichtung (3) mindestens eine Gasentweichungsöffnung (14) aufweist, und wobei das mindestens eine Abdeckelement (6) die mindestens eine Gasentweichungsöffnung (14) abdeckt, und/oder
- wobei die Sicherheitseinrichtung (3) mindestens eine Sollbruchstelle (15) aufweist, und wobei das mindestens eine Abdeckelement (6) die mindestens eine Sollbruchstelle (15) abdeckt.

5. Akkupack (1) nach einem der vorhergehenden Ansprüche,
- wobei die Akkumulatorzelle (2) eine, insbesondere längliche, Rundzelle (2') ist,
- wobei die Sicherheitseinrichtung (3) an einer Stirnseite (S2) der Rundzelle (2') angeordnet ist, und
- wobei das mindestens eine Abdeckelement (6) eine, insbesondere geschlossene, Ringform (RF) hat.

6. Akkupack (1) nach einem der vorhergehenden Ansprüche,
- wobei das Abdeckelement (6) in mindestens einer formtragenden Schicht (16) aufgebracht ist.

7. Akkupack (1) nach einem der vorhergehenden Ansprüche,
- wobei das Abdeckelement (6) für den Isolierlack (5), insbesondere in einem flüssigen Zustand (LS), undurchlässig ist.

8. Akkupack (1) nach Anspruch 7,
- wobei das Abdeckelement (6) teilweise oder vollständig aus PET besteht.

9. Akkupack (1) nach einem der vorhergehenden Ansprüche,
- wobei das Abdeckelement (6) auf der Akkumulatorzelle (2) festklebt, insbesondere festhaftet.

10. Akkupack (1) nach Anspruch 9,
- wobei das Abdeckelement (6) auf der Akkumulatorzelle (2) mittels eines Klebstoffs (17), insbesondere eines Haftklebers (17'), festklebt, wobei der Klebstoff (17) teilweise oder vollständig ein Acrylatklebstoff ist.

11. Akkupack (1) nach Anspruch 9 oder 10,
- wobei eine Klebkraft pro Fläche (KLK) zwischen dem Abdeckelement (6) und der Akkumulatorzelle (2) maximal 1000 N/m² und/oder minimal 0,1 N/m² ist.

12. Akkupack (1) nach Anspruch 6 oder einem von dem Anspruch 6 abhängigen Anspruch und nach einem der Ansprüche 9 bis 11,
- wobei das Abdeckelement (6) selbstklebend ist.

13. Akkupack (1) nach einem der vorhergehenden Ansprüche,
- wobei der Isolierlack (5) auf der spannungsführenden Oberfläche (4) mittels Eintauchens der spannungsführenden Oberfläche (4) in den Isolierlack (5) aufgebracht ist.

14. Bearbeitungssystem (100), wobei das Bearbeitungssystem (100) aufweist:
- einen Akkupack (1) nach einem der vorhergehenden Ansprüche, und
- ein elektrisch angetriebenes Bearbeitungsgerät (101),
- wobei der Akkupack (1) und das Bearbeitungsgerät (101) zur elektrischen Verbindung miteinander zur Versorgung des Bearbeitungsgeräts (101) mit elektrischer Antriebsleistung (AL) von dem Akkupack (1) ausgebildet sind.

15. Verfahren zur Herstellung eines Akkupacks (1), insbesondere nach einem der Ansprüche 1 bis 13, zur Versorgung eines elektrisch angetriebenen Bearbeitungsgeräts (101) mit elektrischer Antriebsleistung (AL), wobei das Verfahren die Schritte aufweist:
a) Abdecken einer Sicherheitseinrichtung (3) einer Akkumulatorzelle (2) mittels mindestens eines Abdeckelements (6), und
b) Eintauchen mindestens einer spannungsführenden Oberfläche (4), insbesondere und der Akkumulatorzelle (2) mit dem mindestens einen Abdeckelement (6), in einen Isolierlack (5) derart, dass der Isolierlack (5) auf der spannungsführenden Oberfläche (4) festhaftet,
- wobei das Abdecken im Schritt a) derart erfolgt, dass durch den Schritt b) kein Isolierlack (5) auf und/oder in der Sicherheitseinrichtung (3) festhaftet.
